# EUROPEAN PATENT SPECIFICATION

(11) **EP 3 807 696 B1**
(45) Date of publication and mention of the grant of the patent: **24.12.2025**
(21) Application number: 19731676.3
(22) Date of filing: 13.06.2019
(51) Int. Cl.: G02B 27/00, G02B 27/01

(54) **HEAD-UP-DISPLAY**
HEAD-UP-ANZEIGE
AFFICHAGE TÊTE HAUTE

(30) Priority: 15.06.2018 EP 18465534
(43) Date of publication of application: 21.04.2021
(73) Proprietor: AUMOVIO Germany GmbH, 60488 Frankfurt am Main (DE)
(72) Inventor: MARKUS, Ferenc, 65824 Schwalbach a. Ts. (DE)
(74) Representative: Aumovio Corporation
(86) International application number: PCT/EP2019/065556
(87) International publication number: WO 2019/238854

(56) References cited:
- WO-A1-2017/060665
- DE-A1- 102012 200 867
- DE-A1- 102014 013 267
- US-A1- 2016 150 218
- HONG HUA ET AL: "A high-resolution optical see-through head-mounted display with eyetracking capability", OPTICS EXPRESS, vol. 21, no. 25, 16 December 2013 (2013-12-16), US, pages 30993, XP055624337, ISSN: 2161-2072, DOI: 10.1364/OE.21.030993

## Description

The present invention is directed to a Head-Up-Display, especially for use in a vehicle.

Nowadays, more and more automotive vehicles are equipped with extra features to aid the driver and help him/her to drive safer on the roads. Such systems are, for example, an interior camera or a head-up display. The latter is in the following abbreviated by HUD. The aim of an interior camera system is to monitor the driver's position and/or status. This is achieved by placing infrared (IR) light source (s) together with an IR camera in front of the driver (e.g. on the steering column). The IR LEDs are illuminating the area where the driver shall be, while his/her body is reflecting this IR lighting back to the IR camera. Using image processing algorithms, this input image is be analysed and used for further features: drowsiness monitoring, distraction control (e.g. phone usage during driving), position check, facial analysis, driver gestures, etc. The purpose of a head-up display (HUD) is to project a virtual image (VI) in front of the driver, in his/her field of view, to a distance from the driver's eyes (projection distance) . The projection may happen in two ways: By using the windshield or by having a special transparent part within the HUD the so called combiner.

The virtual image usually depicts useful, and sometimes crucial information for a safe driving: vehicle speed, warnings, vehicle status messages, GPS orientation messages, etc. Normally, these information are displayed on the cluster instrument of the vehicle, or within the interior cockpit display. By having a head-up display image with these information at a proper distance, the driver's eyes do not have to refocus or accommodate to a new distance or location - as it is the case with the internal displays - so his/her focus can stay on the road, thus having a better safety while using a HUD. The invention is referring to a special type of windshield HUD where the optical system is formed not by conventional mirrors and/or lenses, but from special holographic layers, cased between two transparent glass layers called waveguide. These glass layers act as optical pupil expanders, and by this the input image is magnified and also projected in a defined direction on the output area. For a more detailed description refer to US 2016/0124223 A1. When a vehicle has both of these systems, interior camera and HUD, then these take separate space in the dashboard, while in most cases there is no functional connection between them. Each of them is working independently: The HUD system is usually not using any information from the interior camera, e.g. the head position of the driver. Disadvantages of the current products are the requirement for much space in the vehicle, high cost of manufacturing, complex integration in the vehicle, and the fact that useful information from the interior camera is not used by HUD. An improved solution is desired.

A Head-Up-Display according to the invention is described in claim 1. In a waveguide-type HUD an interior camera is incorporated by placing it under the transparent glass plates of a waveguide type HUD. The Head-Up-Display according to the invention is using a waveguide for projecting light via a mirror into a user's eye to generate a virtual image, wherein a camera is placed below the waveguide. Advantageously the camera is thus not visible by the user but still can "see" him through the transparent waveguide.

Advantageously, also a light source is placed below the waveguide. This light source is thus not visible by the user but still can "shine" onto him through the transparent waveguide.

Usually infrared or ultraviolet light is used, so that the driver not only does not see the light source but also is not disturbed by the light emitted by this light source.

According to a variant of the invention either the camera or the light source or both are placed on a carrying part arranged below the waveguide. This has the advantage of a low space requirement, i.e. a small footprint of the combination of HUD and interior camera.

Advantageously an image output of the camera is connected to an eye position detector and an output of the eye position detector is connected to a picture generator. This has the advantage that the picture generator thus is brought into a position to adapt the picture to be displayed in a way optimized for the user's actual viewing position.

Advantageously the picture generator warps the image to be displayed according to the signal received from the eye position detector. This compensates for different image distortions caused by different areas of the windshield at which the light coming from the waveguide is reflected. Depending on the user's actual position the light path goes through such different areas and thus requires different warping to generate an ideal virtual image.

According to an improvement of the invention the picture generator brightens or dims areas of the image to be displayed depending on the signal received from the eye position detector. For different eye positions certain different areas of the virtual image are not visible to the eye. These areas are locally dimmed by the picture generator, as they are anyway not visible. This saves energy. Other respective areas that are in sight of the user are brightened. This increases contrast and thus visibility.

Further advantages and details of the invention will become apparent also from the description of embodiments by means of drawings. These show:
- Fig.1: Head-Up-Display according to the state of the art
- Fig.2: Head-Up-Display according to the state of the art
- Fig.3: Head-Up-Display according to the invention
- Fig.4: Details of an inventive Head-Up-Display
- Fig.5: Eye tracking principle

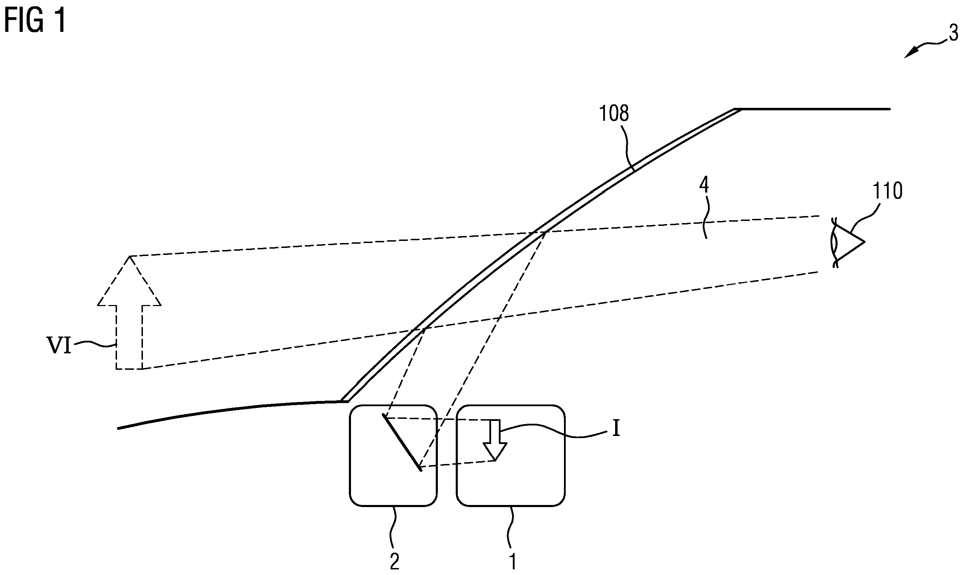

Fig.1 shows a Head-Up-Display according to the state of the art. It has an image projection system that projects an image I via an optical system 2 and a windshield 108 into the eye 110 of a driver. The driver then sees the virtual image VI at a certain distance outside of the vehicle 3. One can recognize that the eye 110 only captures a part of the beam of light 4 that reaches the eye coming from the windshield 108. The user may thus move his position and as long as the eye stays within the beam of light 4 the virtual image is still visible. The area within which the eye has to be positioned to see the full virtual image is called eyebox.

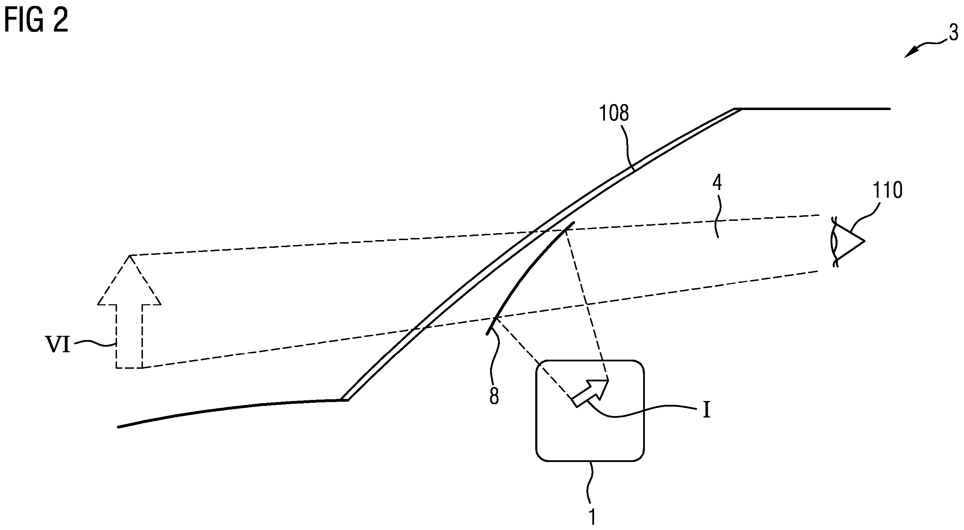

Fig.2 shows a Head-Up-Display according to Fig.1 where in front of the windshield 108 a so-called combiner 8 is arranged. The combiner 8 is a special transparent part within the HUD. The light coming from the image projection system 1 is reflected by the combiner 8 into the eye 110. In this variant, no further optical system 2 is shown. However, such optical system 2 may also be used together with a combiner. And also the previously described variant without combiner may also be implemented without a dedicated optical system 2 as long as image projection system 1 and windshield 108 cooperate such as to provide a sufficiently wide beam of light 4.

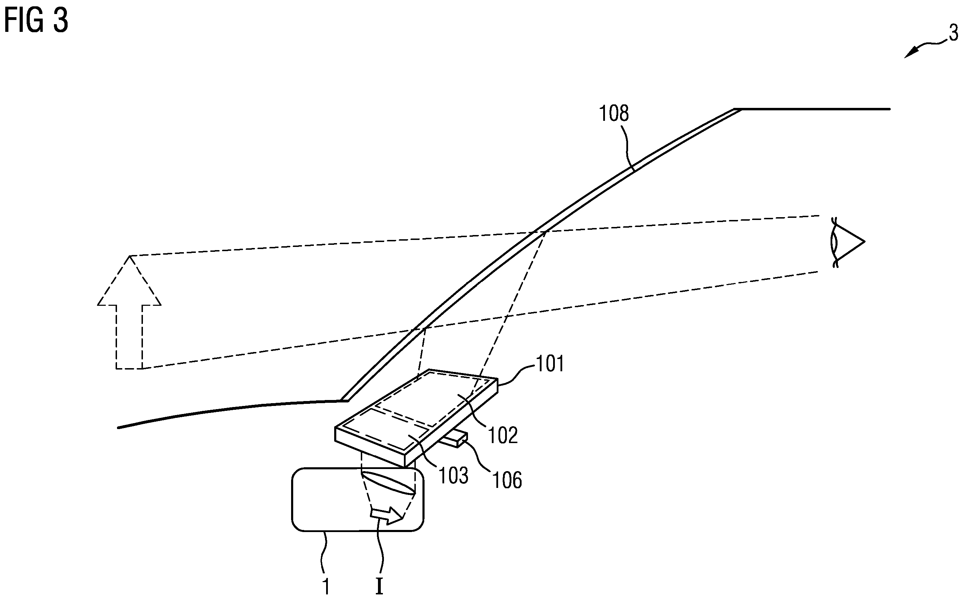

Fig.3 shows a Head-Up-Display according to the invention. The optical system 2 known from the previous drawings which is formed by conventional mirrors and/or lenses, is here replaced by special holographic layers, cased between two transparent glass layers called the waveguide 101. The waveguide 101 acts as optical pupil expander, and by this the input image I projected from the image projection system 1 to an input area 103 of the waveguide 101 is magnified and also projected in a defined direction from and output area 102 to the windshield 108. A camera 106 is placed below the waveguide 101 and sees through the waveguide 101, as the waveguide 101 is transparent.

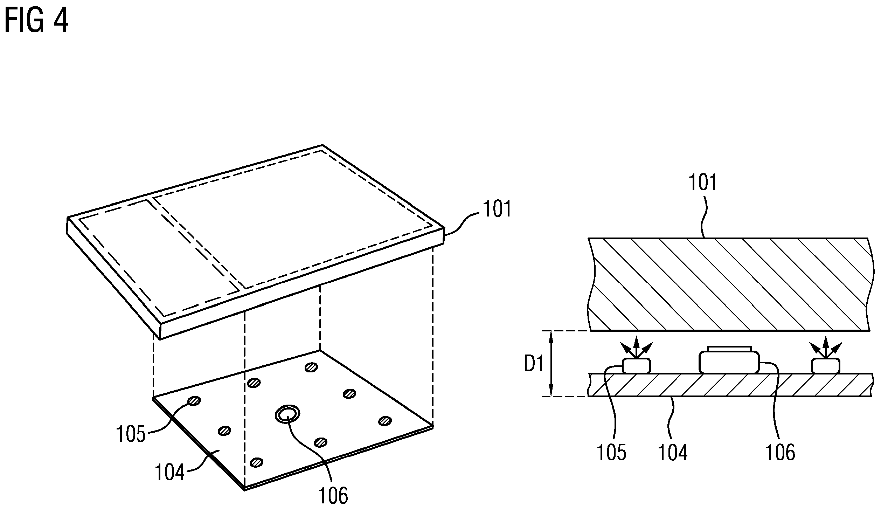

Fig.4 shows details of an inventive Head-Up-Display. The core of the current invention is to profit from the transparency of the waveguide glasses, thus being able to place one or several IR LEDs 105 and an IR camera 106 under the glass of the waveguide 101. Under the waveguide 101 a carrying part 104, for example a printed circuit board, holds the IR LEDs 105 and the IR camera 106. The right side of the drawing represents a section through the whole system in an assembled state. One can observe that the dimension "D1" is important for the overall thickness of the whole system, and is directly influenced by the thickness of the carrying part 104 and the components on it. For sure, the current arrangement is not the only suitable one. It can be changed and optimized to suite the application better: less LEDs 105, two or more IR cameras 106, separate carrying parts for the LED(s) and the camera(s), etc.

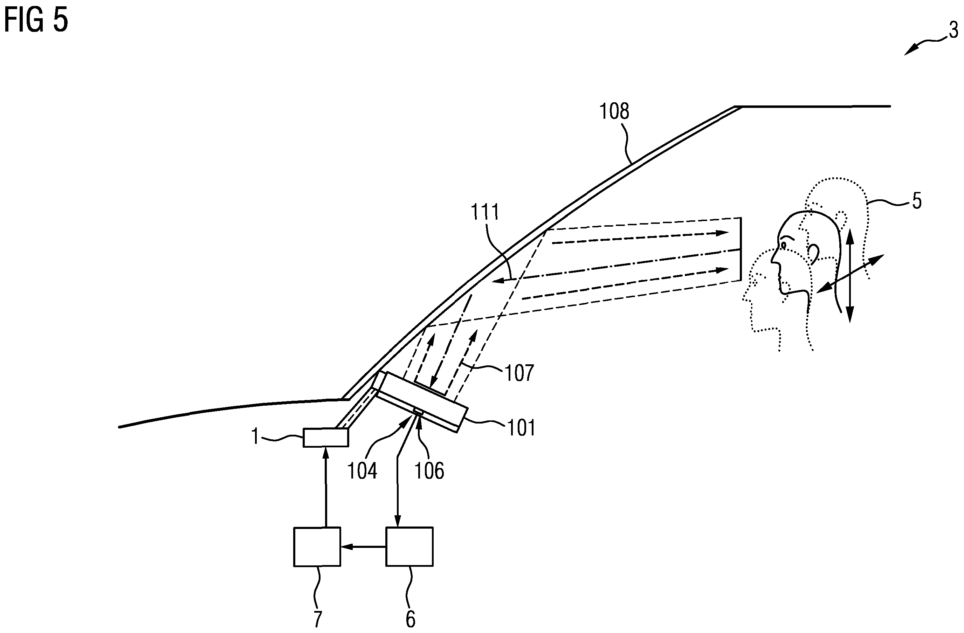

Fig.5 shows the eye tracking principle that shall be familiar to all who are knowledgeable in the art. The IR LEDs 105 on the carrier part 104 are emitting IR light 107 through the waveguide 101, which light 107 is reflected towards the driver 5 by the windshield 108. Then the driver's 5 head is reflecting light 111 back towards the windshield 108, and then downwards towards the IR camera 106, and an image is formed. This image is then processed by an eye position detector 6. Thus the position of the driver's 5 head and his eyes 110 is known. The system shall be capable of getting this position regardless of the movement direction, whether horizontal or vertical. The detected eye position is provided by the eye position detector 6 to a picture generator 7 that generates the electronic version of the image I to be displayed and provides this to the image projection system 1.

Besides the advantage of having an optimized space within the vehicle 3, the current system can bring some new features to a waveguide HUD system, such as active content shift within the virtual image VI and/or optimization according to the detected head position. Because the current HUD uses a windshield 108 to reflect the image to the eyes of the driver, this is distorting the input image. To overcome this unwanted effect, so called image warping is applied by the picture generator 7 to the input image. This means an intentional change in the input image, which cancels the windshield distortion in the virtual image. By knowing the position of the driver's head, this warping can be made active, meaning that it will change according to the viewing position of the driver 5, thus enhancing the quality of the image. A further new feature is bBrightness optimization of the virtual image according to the head position. The brightness of the virtual image is made higher, by concentrating it in the area where the head of the driver is. A further new feature is interactive HUD content. The IR system is used also for detecting gestures. According to these, the user might change the virtual image's content properties, such as size, layout, colour, etc., or to gain additional functions during driving, such as content update. The described invention may be applied to, but is not limited to automotive cockpits, airplane cockpits, or any other places where waveguide type Head-Up-Display systems are used.

### List of reference signs

- 1: image projection system
- 2: optical system
- 3: vehicle
- 4: beam of light
- 5: driver
- 6: eye position detector
- 7: picture generator
- 8: combiner

- 101: waveguide
- 102: output area
- 103: input area
- 104: carrying part
- 105: IR LED
- 106: IR camera
- 107: IR light
- 108: windshield
- 110: eye
- 111: light, coming from driver

- I: Image
- VI: Virtual Image

## Claims

1. Head-Up-Display comprising:
- an image projection system (1),
- a waveguide (101) made from holographic layers, cased between two transparent glass layers for projecting light via a windshield (108) into a user's eye (110) to generate a virtual image (VI),
- an eye position detector (6) and
- a camera (106) wherein the camera (106) is placed below the waveguide (101) and sees through the waveguide (101), the image output of the camera (106) being connected to the eye position detector (6).

2. Head-Up-Display according to claim 1, wherein a light source (105) is placed below said waveguide (101).

3. Head-Up-Display according to claim 1 or 2, wherein at least one of a camera (106) and a light source (105) is placed on a carrying part (104) arranged below said waveguide (101).

4. Head-Up-Display according to one of claims 1-3, wherein an image output of the camera (106) is connected to an eye position detector (6) and an output of the eye position detector (6) is connected to a picture generator (7).

5. Head-Up-Display according to claim 4, wherein the picture generator (7) warps the image to be displayed according to the signal received from the eye position detector (6).

6. Head-Up-Display according to claim 4 or 5, wherein the picture generator (7) brightens and dims areas of the image to be displayed depending on the signal received from the eye position detector (6).

7. Head-Up-Display according to one of the preceding claims, wherein said waveguide (101) acts as a pupil expander.

8. Head-Up-Display according to one of the preceding claims, wherein said camera (106) is an IR camera (106) being arranged to detect IR light through transparent glass layers of said waveguide (101).

## Patentansprüche

1. Head-Up-Anzeige, umfassend:
ein Bildprojektionssystem (1),
einen Wellenleiter (101), hergestellt aus holographischen Schichten, eingefasst zwischen zwei transparenten Glasschichten zum Projizieren von Licht über eine Windschutzscheibe (108) in ein Auge (110) eines Benutzers zur Erzeugung eines virtuellen Bildes (VI, "virtual image"),
einen Augenpositionsdetektor (6) und
eine Kamera (106), wobei die Kamera (106) unterhalb des Wellenleiters (101) angeordnet ist und durch den Wellenleiter (101) hindurchsieht, wobei die Bildausgabe der Kamera (106) mit dem Augenpositionsdetektor (6) verbunden ist.

2. Head-Up-Anzeige nach Anspruch 1, wobei eine Lichtquelle (105) unterhalb des genannten Wellenleiters (101) angeordnet ist.

3. Head-Up-Anzeige nach Anspruch 1 oder 2, wobei mindestens eines von einer Kamera (106) und einer Lichtquelle (105) auf einem Tragteil (104) angeordnet ist, welches unterhalb des genannten Wellenleiters (101) angeordnet ist.

4. Head-Up-Anzeige nach einem der Ansprüche 1 bis 3, wobei eine Bildausgabe der Kamera (106) mit einem Augenpositionsdetektor (6) verbunden ist und ein Ausgang des Augenpositionsdetektors (6) mit einem Bildgenerator (7) verbunden ist.

5. Head-Up-Anzeige nach Anspruch 4, wobei der Bildgenerator (7) das anzuzeigende Bild entsprechend dem vom Augenpositionsdetektor (6) empfangenen Signal verzerrt.

6. Head-Up-Anzeige nach Anspruch 4 oder 5, wobei der Bildgenerator (7) Bereiche des anzuzeigenden Bildes in Abhängigkeit von dem vom Augenpositionsdetektor (6) empfangenen Signal aufhellt und verdunkelt.

7. Head-Up-Anzeige nach einem der vorhergehenden Ansprüche, wobei der genannte Wellenleiter (101) als Pupillenexpander wirkt.

8. Head-Up-Anzeige nach einem der vorhergehenden Ansprüche, wobei die genannte Kamera (106) eine IR-Kamera (IR, "infrared"; 106) ist, welche eingerichtet ist zum Detektieren von IR-Licht durch transparente Glasschichten des genannten Wellenleiters (101).

## Revendications

1. Affichage tête haute comprenant :
- un système de projection d'images (1),
- un guide d'ondes (101) constitué de couches holographiques, inséré entre deux couches de verre transparent pour projeter de la lumière par le biais d'un pare-brise (108) dans l'œil d'un utilisateur (110) pour générer une image virtuelle (VI),
- un détecteur de position des yeux (6) et
- une caméra (106), dans lequel la caméra (106) est placée sous le guide d'ondes (101) et voit à travers le guide d'ondes (101), la sortie d'image de la caméra (106) étant reliée au détecteur de position des yeux (6).

2. Affichage tête haute selon la revendication 1, dans lequel une source lumineuse (105) est placée sous ledit guide d'ondes (101).

3. Affichage tête haute selon la revendication 1 ou 2, dans lequel au moins l'une d'une caméra (106) et d'une source lumineuse (105) est disposée sur une pièce porteuse (104) agencée sous ledit guide d'ondes (101).

4. Affichage tête haute selon l'une des revendications 1 à 3, dans lequel une sortie d'image de la caméra (106) est reliée à un détecteur de position des yeux (6) et une sortie du détecteur de position des yeux (6) est reliée à un générateur d'images (7).

5. Affichage tête haute selon la revendication 4, dans lequel le générateur d'images (7) déforme l'image à afficher selon le signal reçu en provenance du détecteur de position des yeux (6).

6. Affichage tête haute selon la revendication 4 ou 5, dans lequel le générateur d'image (7) éclaire ou assombrit des zones de l'image à afficher en fonction du signal reçu en provenance du détecteur de position des yeux (6).

7. Affichage tête haute selon l'une des revendications précédentes, dans lequel ledit guide d'ondes (101) agit comme un extenseur de pupille.

8. Affichage tête haute selon l'une des revendications précédentes, dans lequel ladite caméra (106) est une caméra infrarouge (106) étant conçue pour détecter la lumière infrarouge à travers des couches de verre transparent dudit guide d'ondes (101).
